# EUROPEAN PATENT SPECIFICATION

(11) **EP 2 410 625 B1**
(45) Date of publication and mention of the grant of the patent: **26.11.2014**
(21) Application number: 11174218.5
(22) Date of filing: 15.07.2011
(51) Int. Cl.: H02G 3/12

(54) **Tamper-proof socket outlet assembly**
Manipulationssichere Steckdosenanordnung
Ensemble de prise de courant inviolable

(30) Priority: 21.07.2010 IN CH20832010
(43) Date of publication of application: 25.01.2012
(73) Proprietor: Schneider Electric Industries SAS, 92500 Rueil-Malmaison (FR)
(72) Inventor: Rao, Arjun, 560066 Bangalore (IN)
(74) Representative: Bonatto, Marco

(56) References cited:
- EP-A2- 2 075 889
- US-A- 4 584 856
- US-A- 4 970 349

## Description

### Field of Invention

The present invention relates to a tamper-proof socket outlet assembly, particularly to a socket outlet assembly that requires an unlocking means to gain access to the power and/or data terminals through shutters or by dismantling the assembly.

### Background of the Invention

Access control to the power and/or data terminals is essential in order avoid energy theft and unauthorized usage. Also, the security system is mandatory in cases where the data is transferred over the phone lines. Restricted power outlets and/or data outlets restrict the access to the terminals using the access keys (mechanical or electronic). However, such restricted power and/or data outlets are still open to energy theft because an unauthorized user could dismantle the assembly and access the terminals directly. Thus, security needs to be enhanced by providing a solution that would prevent an unauthorized user from both opening the terminal shutters and dismantling the assembly to obtain unauthorized access to the terminals.

### Objects of the Invention

It is therefore the object of the invention to provide a tamper-proof socket outlet assembly such that access to the shutters of the terminals and the mounting points of the assembly are controlled by an access key, such that, access to the terminals either through shutter entry or by dismantling the assembly would not be possible without the availability of the access key.

It is a further object of the invention to provide a special tool to dismantle the assembly before reaching the terminal.

### Brief Description of the Invention

The tamper-proof socket outlet assembly according to the present invention comprises entry restriction means, for instance, shutters, covering both socket terminal holes into which a plug or a jack is capable of being inserted and mounting means, such as screws or the like. The mounting means is used to appropriately install the socket assembly and is preferably positioned substantially in between the plug pin entry apertures, however, it could also be suitably placed anywhere in the vicinity of the apertures. A security device is fixed on a top cover of the socket outlet assembly. The security device is looped with both the shutters covering the terminal apertures and the mounting means. The locking of the security device would result in the movement path of the shutters to be blocked, thus preventing access to both the socket terminal and the mounting means. The unlocking of the security device would result in the movement path of the shutter to be released, thus allowing access to the socket terminal and the mounting means.

The security device according to the present invention is either a mechanical lock or an electronic lock.

In a further embodiment of the invention an unlocking means is used to operate the security device. The unlocking means, when inserted into the security device, is linked to both the shutter for the terminal and the mounting means and releases the movement path of the terminal shutters and the mounting means shutter for the insertion of the plug/jack. The shutters automatically move to the closed position once the plug/jack is removed, such that the terminal apertures and the mounting means become inaccessible.

In a preferred embodiment a common shutter is provided for both the terminal and the mounting means. The shutters are either rotary shutters or slider shutters.

In an alternate embodiment, separate shutters are provided for the terminals and the mounting means and the separate shutters are linked to a single unlocking means. It is also envisaged to independently link the terminal shutters and the shutter for the mounting means to the unlocking means, so that the unlocking means could independently release only the terminal shutters without releasing the shutter covering the mounting means and vice versa. The shutters in this alternate embodiment are either rotary shutters or slider shutters. Optionally, a slider or rotary shutter is used for the terminal shutters and a slider or rotary shutter is used for the shutter covering the mounting means.

In another related embodiment of the present invention, a special tool is provided to either assemble or dissemble the socket outlet assembly. The special tool is attached together with a plug or a dummy plug that is capable of being inserted into the socket terminal holes, once the unlocking means releases the shutter path. The plug pins displaces the terminal shutters, thus opening up the shutter covering the mounting means. The special tool would then engage with the mounting means for operation to assemble or disassemble the socket outlet assembly.

### Brief Description of the Drawings

Referring now to the drawings wherein the showings are for the purpose of illustrating a preferred embodiment of the invention only, and not for the purpose of limiting the same: -
Figure 1 shows a schematic for controlling access of a socket assembly according to the existing art;
Figure 2 shows the schematic for controlling access of a socket assembly according to the present invention;
Figure 3 shows the exploded view of the tamper proof socket outlet assembly according to the present invention;
Figure 4 shows the shutter position for the mounting screw according an embodiment of the present invention;
Figure 5a shows the special tool and the unlocking means used in tandem with the socket outlet assembly according to the present invention; and
Figure 5b shows the front view of the restricted socket outlet according to the present invention.

### Detailed Description of the Invention

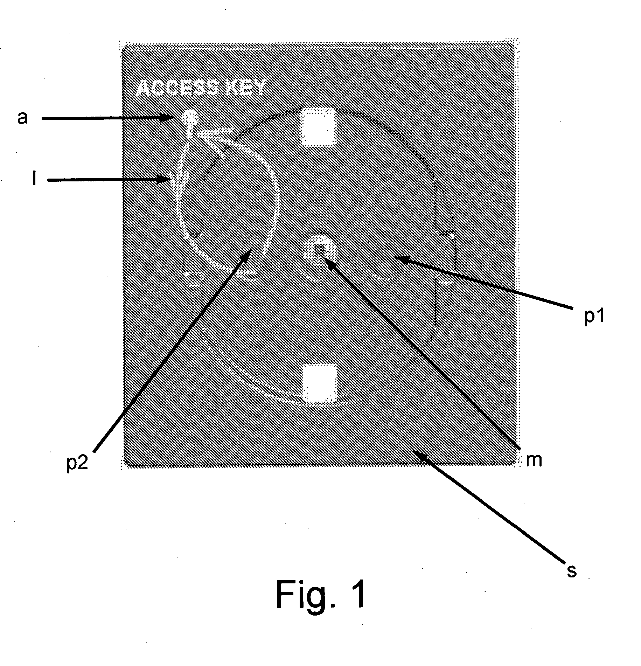

The existing system of controlling access of a socket assembly is as shown in figure 1. The unlocking means (a) is linked with the shutters covering plug pin entry holes (p1, p2), thus controlling access to the use of the socket assembly. The arrow mark (I) indicates the security loop linking the unlocking means (a) and the shutters (s). However, the mounting means (m) that mounts the socket assembly (s) remains open to removal thereby resulting in unauthorized access of the terminal by dismantling of the assembly. Thus, there still remains a security threat to the socket terminal assembly since an unauthorized user could tamper with the assembly itself to gain access to the terminal by dismantling the assembly, thus resulting in energy theft.

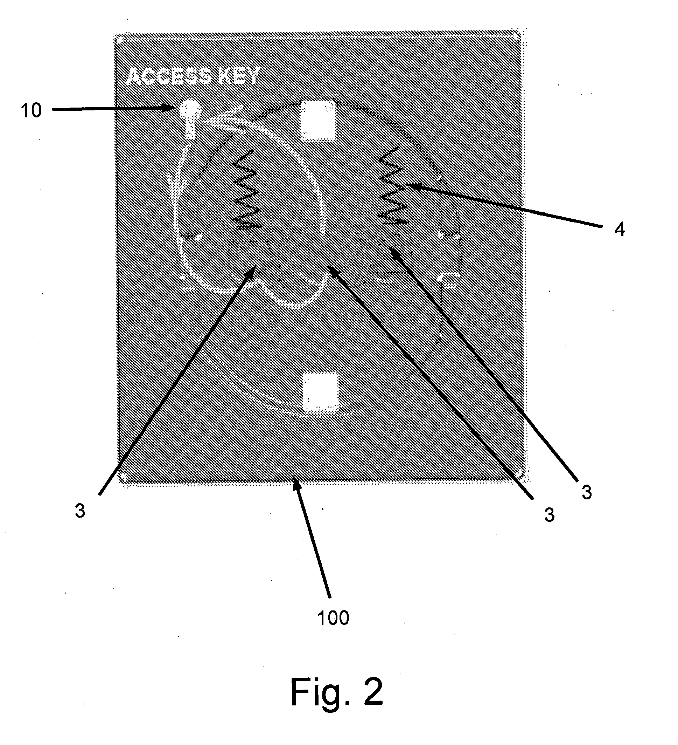

Accordingly, the present invention provides a solution to prevent unauthorized access of the power or data terminals either through the terminals or by dismantling of the assembly. Referring to figure 2 of the enclosed drawings, a schematic of the invention is provided. The mounting means, preferably a mounting screw or the like, is also covered by an entry restriction means such as shutter (3), which movement is also linked with the unlocking means (10), thus securing the access to the mounting means. The shutter is linked to a shutter spring (4). Without using the unlocking means (10), which is only available with authorized personnel, a user cannot insert a plug/jack into the terminals nor can the user dismantle the assembly (100) by unfastening the mounting means. Thus, energy theft is avoided and the socket outlet terminal assembly (100) is secure and tamper-proof.

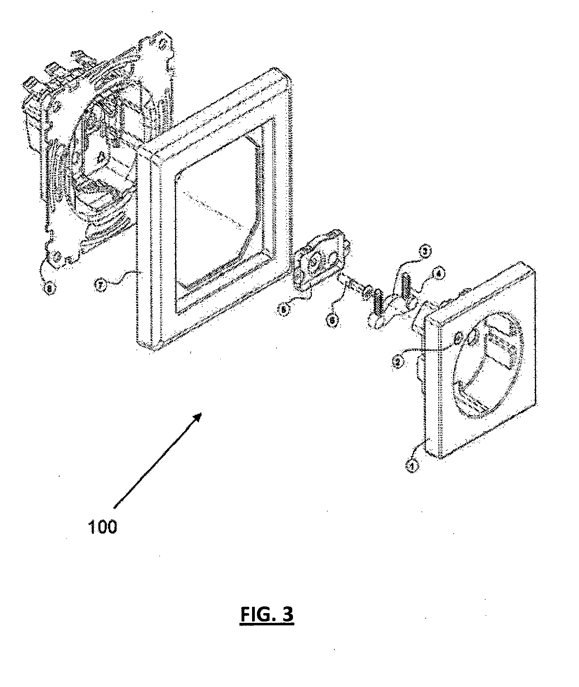

Figure 3 provides an exploded view of the socket terminal assembly according to the present invention. The socket terminal assembly (100) according to the instant invention comprises a top cover (1) having a security device (2) fixed to it. The security device (2) restricts or permits the motion of the entry restriction means (3). The entry restriction means (3) is in the form of a shutter (3). A shutter spring (4) is provided to automatically revert the shutter (3) to its normal position when a plug/jack inserted in the terminals is removed. Mounting means (5) is inserted centrally into a shutter housing (6) and the subassembly of the shutter (3) together with the shutter spring (4) is assembled into the shutter housing (6). The assemblage having the shutter (3), shutter spring (4), mounting means (5) and the shutter housing (6) is fitted with the top cover (1) by suitable fitting process such as welding or the like. The socket outlet assembly (100) is completed by placing an aesthetic frame (7) over a socket outlet (8) and the top cover (1) is mounted over the frame (7) and fastened with the mounting means (5).

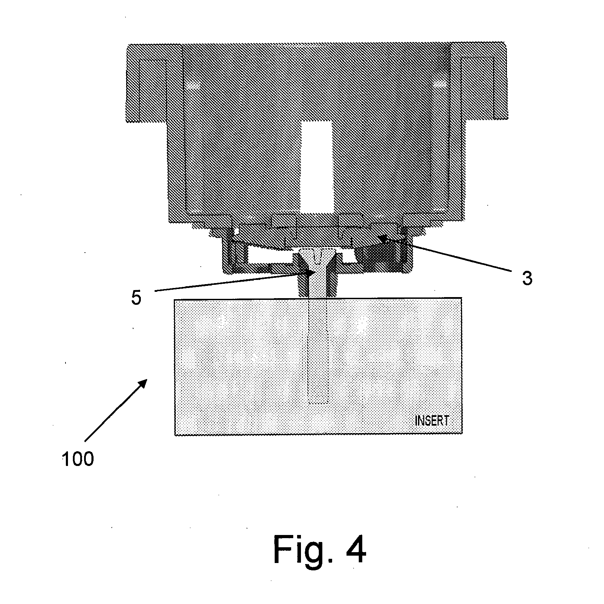

Illustrated in figure 4 is the sectional top view of the socket assembly of the invention showing the mounting means (5) covered by the shutter (3). Although these illustrations show a single shutter covering both the terminal openings and the mounting means, it is within the scope of this invention to envisage a shutter covering the terminal openings and a separate shutter covering the mounting means, each being linked independently or together to a single security device.

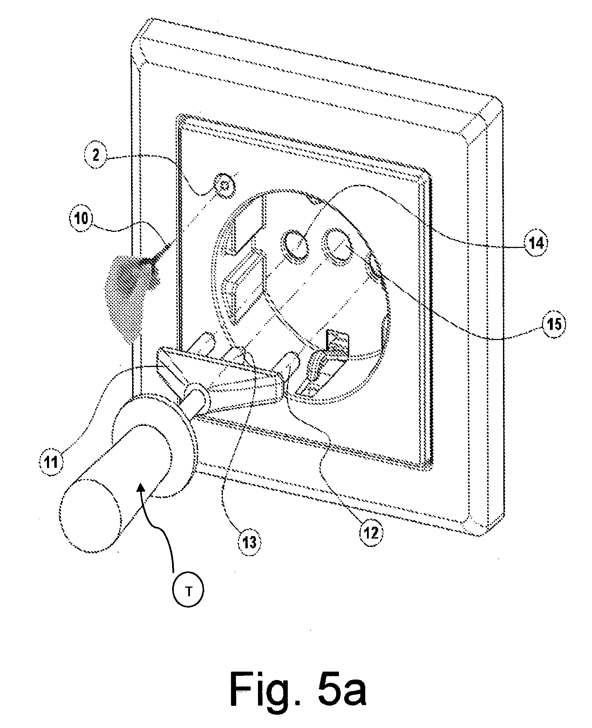

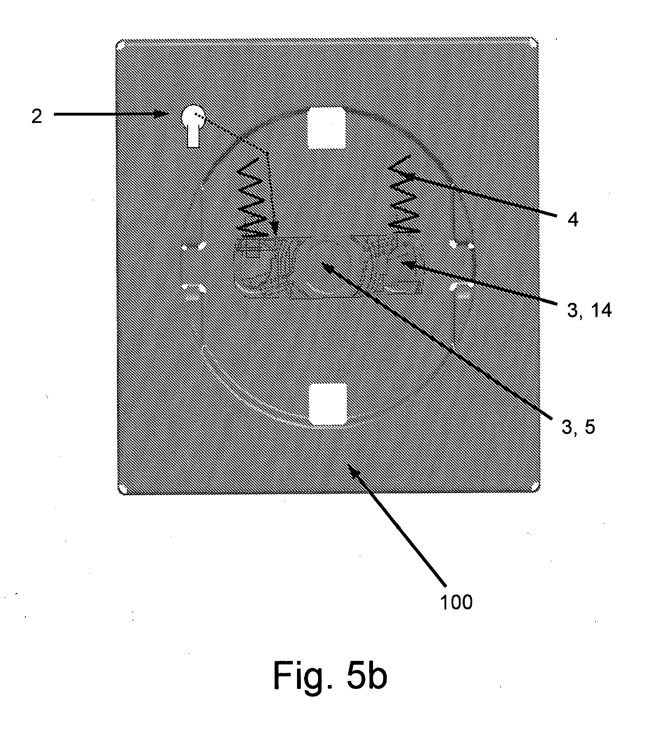

Referring to figure 5, an unlocking means (10) is shown, which can be inserted into the security device (2). The security device (2) can either be a mechanical lock or an electronic lock and the unlocking means (10) is preferably an access key corresponding to the type of security device used. The unlocking means (10) is linked to the shutters of both the terminals and the mounting means and upon unlocking the security device the movement path of the shutters covering the terminal holes (14) and/or the mounting means aperture (15) is released, so that an authorized user can gain access to the terminals and insert the necessary plug/jack and use the power from the terminal assembly. The shutter springs (4) shown in figure 5b are operated by the force from the plug/jack insertion.

A special tool (T) used to assemble or disassemble the socket outlet assembly, when required, is illustrated in figure 5. To assemble or disassemble the socket outlet assembly, firstly, the unlocking means (10) is inserted into the security device (2) to release the shutter path in the opening direction. The special tool (T) comprises a mounting means removing tool (13) with an attached plug or dummy plug (11). With the unlocking means (10) in its place, the special tool (T) is inserted into the socket terminal assembly such that the plug pins (12) of the plug (11) portion of the special tool (T) displaces the terminal shutters to its open position, thus simultaneously displacing the shutter covering the mounting means to reveal the mounting means (15). The mounting means removing tool (13) is now capable of engaging with the mounting means (15) for fastening or unfastening the same.

The unlocking means (10) is constructed to only release the shutter access. Once the access to the shutter is released, the unlocking means (10) is removed from the security device (2). The locking of the shutter movement happens automatically upon removal of the plug/jack due to the spring action of the shutter spring, thus preventing use of the terminal assembly without once again unlocking the security device using the unlocking means (10).

In an alternate embodiment, if separate shutters, controlled by a single unlocking means, are used for the terminals and the mounting means, then an ordinary hand tool without an attached plug or dummy plug could unfasten the mounting means, since the user can selectively release the movement path of only the shutter covering the mounting means.

While the above paragraphs explain the various embodiments of the invention, it is apparent that numerous modifications and variations can be made without departing from the scope of this invention.

## Claims

1. A tamper-proof socket outlet assembly (100) comprising:
terminal entry apertures (p1, p2) for entry of a plug or jack;
mounting means (5) provided in the vicinity of said terminal entry apertures to install said socket assembly;
entry restriction means (3) provided to cover said terminal entry apertures and said mounting means (5); and
a security device (2) capable of being unlocked by a removable unlocking means (10) and linked with said entry restriction means (3), such that, said terminal entry apertures (p1, p2) and mounting means (5) are accessible only upon unlocking said security device (2) using said removable unlocking means (10), **characterized in that**
separate entry restriction means (3) are provided for said terminal entry apertures and said mounting means and said entry restriction means (3) are linked together to said unlocking means (10).

2. The assembly as claimed in claim 1, wherein said security device (2) is either a mechanical lock or an electronic lock and said unlocking means (10) is an access key corresponding with said mechanical or electronic lock.

3. The assembly as claimed in claim 1, wherein said entry restriction means (3) is a shutter, preferably a slider shutter or a rotary shutter.

4. The assembly as claimed in claim 1, wherein said entry restriction means (3) is configured to automatically move to a closed position once the plug or jack is removed.

5. The assembly as claimed in claim 1, wherein a common shutter is provided for both the terminal entry apertures and the mounting means.

6. A tamper-proof socket outlet assembly (100) comprising:
terminal entry apertures (p1, p2) for entry of a plug or jack;
mounting means (5) provided in the vicinity of said terminal entry apertures to install said socket assembly;
entry restriction means (3) provided to cover said terminal entry apertures and said mounting means (5); and
a security device (2) capable of bein unlocked a removable untocking means 10 and linked with said entry restriction means (3), such that said terminal entry apertures (p1, p2) and mounting means (5) are accessible only upon unlocking said security device (2) using said removable unlocking means (10) **characterized in that**
separate shutters are provided for said terminal entry apertures and said mounting means and said separate shutters are independently linked to said unlocking means.

7. The assembly as claimed in claim 1 or 6, wherein for dismantling said assembly, a special tool (T), being a combination of a mounting means removing tool (13) and an attached plug (11), is provided to simultaneously displace said entry restriction means (3) upon unlocking said security device (2) and engage with said mounting means (5) to unfasten the same.

8. The assembly as claimed in claim 1 or 6, wherein said security device (2) is fixed on a top cover (1) of said assembly.

9. The assembly as claimed in claim 3, wherein said mounting means (5) is inserted centrally into a shutter housing (6) and said shutter (3) together with a shutter spring (4) is assembled into said shutter housing (6), and said shutter housing comprising the mounting means, shutter and shutter spring is fixed to a top cover of said assembly.

## Patentansprüche

1. Manipulationssichere Steckdosenanordnung (100), umfassend:
Anschlusskontakt-Eintrittsöffnungen (p1, p2) zum Einführen eines Steckers oder eines Klinkensteckers;
eine Montagevorrichtung (5), die in der Nähe der Anschlusskontakt-Eintrittsöffnungen zum Installieren der Steckdosenanordnung vorgesehen ist;
eine Einführbeschränkungsvorrichtung (3), die zum Abdecken der Anschlusskontakt-Eintrittsöffnungen und der Montagevorrichtung (5) vorgesehen ist; und
eine Sicherheitsvorrichtung (2), die durch eine lösbare Entriegelungsvorrichtung (10) entriegelt werden kann und derart mit der Einführbeschränkungsvorrichtung (3) verbunden ist, dass die Anschlusskontakt-Eintrittsöffnungen (p1, p2) und die Montagevorrichtung (5) nur nach dem Entriegeln dieser Sicherheitsvorrichtung (2) unter Verwendung der lösbaren Entriegelungsvorrichtung (10) zugänglich sind, **dadurch gekennzeichnet, dass**
separate Einführbeschränkungsvorrichtungen (3) für die Anschlusskontakt-Eintrittsöffnungen und die Montagevorrichtung vorgesehen sind und diese Einführbeschränkungsvorrichtungen (3) zusammen mit der Entriegelungsvorrichtung (10) verbunden sind.

2. Anordnung nach Anspruch 1, wobei die Sicherheitsvorrichtung (2) entweder eine mechanische Sperre oder eine elektronische Sperre ist und die Entriegelungsvorrichtung (10) ein Zugriffsschlüssel ist, der zu der mechanischen oder elektronischen Sperre passt.

3. Anordnung nach Anspruch 1, wobei die Einführbeschränkungsvorrichtung (3) ein Verschluss, vorzugsweise ein Schiebeverschluss oder ein Drehverschluss, ist.

4. Anordnung nach Anspruch 1, wobei die Einführbeschränkungsvorrichtung (3) gestaltet ist, um sich automatisch in eine geschlossene Stellung zu bewegen, wenn der Stecker oder der Klinkenstecker entfernt wird.

5. Anordnung nach Anspruch 1, wobei ein gemeinsamer Verschluss für sowohl die Anschlusskontakt-Eintrittsöffnungen als auch die Montagevorrichtung vorgesehen ist.

6. Manipulationssichere Steckdosenanordnung (100), umfassend:
Anschlusskontakt-Eintrittsöffnungen (p1, p2) zum Einführen eines Steckers oder eines Klinkensteckers;
eine Montagevorrichtung (5), die in der Nähe der Anschlusskontakt-Eintrittsöffnungen zum Installieren der Steckdosenanordnung vorgesehen ist;
eine Einführbeschränkungsvorrichtung (3), die zum Abdecken der Anschlusskontakt-Eintrittsöffnungen und der Montagevorrichtung (5) vorgesehen ist; und
eine Sicherheitsvorrichtung (2), die durch ein lösbare Entriegelungsvorrichtung (10) entriegelt werden kann und derart mit der Einführbeschränkungsvorrichtung (3) verbunden ist, dass die Anschlusskontakt-Eintrittsöffnungen (p1, p2) und die Montagevorrichtung (5) nur nach dem Entriegeln dieser Sicherheitsvorrichtung (2) unter Verwendung der lösbaren Entriegelungsvorrichtung (10) zugänglich sind, **dadurch gekennzeichnet, dass**
separate Verschlüsse für die Anschlusskontakt-Eintrittsöffnungen und die Montagevorrichtung vorgesehen sind und diese separaten Verschlüsse unabhängig mit der Entriegelungsvorrichtung verbunden sind.

7. Anordnung nach Anspruch 1 oder 6, wobei zum Demontieren dieser Anordnung ein spezielles Werkzeug (T), das eine Kombination aus einem Werkzeug zum Entfernen der Montagevorrichtung (13) und einem angebauten Stecker (11) ist, vorgesehen ist, um simultan die Einführbeschränkungsvorrichtung (3) beim Entriegeln der Sicherheitsvorrichtung (2) zu verschieben und in die Montagevorrichtung (5) einzugreifen, um sie zu lösen.

8. Anordnung nach Anspruch 1 oder 6, wobei die Sicherheitsvorrichtung (2) auf einer oberen Abdeckung (1) dieser Anordnung befestigt ist.

9. Anordnung nach Anspruch 3, wobei die Montagevorrichtung (5) mittig in ein Verschlussgehäuse (6) eingesetzt ist und dieser Verschluss (3) zusammen mit einer Verschlussfeder (4) in das Verschlussgehäuse (6) eingebaut ist, und wobei dieses Verschlussgehäuse, das die Montagevorrichtung, den Verschluss und die Verschlussfeder umfasst, an einer oberen Abdeckung dieser Anordnung befestigt ist.

## Revendications

1. Ensemble de prise de courant inviolable (100) comprenant :
des ouvertures d'entrée de terminal (pl, p2) pour l'entrée d'une fiche ou d'un jack ;
des moyens de montage (5) disposés à proximité desdites ouvertures d'entrée de terminal pour installer ledit ensemble de prise ;
des moyens de restriction d'entrée (3) prévus pour couvrir lesdites ouvertures d'entrée de terminal et lesdits moyens de montage (5) ; et
un dispositif de sécurité (2) capable d'être déverrouillé par un moyen de déverrouillage amovible (10) et relié avec lesdits moyens de restriction d'entrée (3), de manière que lesdites ouvertures d'entrée de terminal (p1, p2) et lesdits moyens de montage (5) soient accessibles seulement lors du déverrouillage dudit dispositif de sécurité (2) en utilisant ledit moyen de déverrouillage amovible (10),
**caractérisé en ce que**
des moyens de restriction d'entrée séparés (3) sont prévus pour lesdites ouvertures d'entrée de terminal et
lesdits moyens de montage et lesdits moyens de restriction d'entrée (3) sont reliés conjointement audit moyen de déverrouillage (10).

2. Ensemble selon la revendication 1, dans lequel ledit dispositif de sécurité (2) est soit une serrure mécanique soit une serrure électronique et ledit moyen de déverrouillage (10) est une clé d'accès correspondant à ladite serrure mécanique ou électronique.

3. Ensemble selon la revendication 1, dans lequel lesdits moyens de restriction d'entrée (3) sont un obturateur, de préférence un obturateur coulissant ou un obturateur rotatif.

4. Ensemble selon la revendication 1, dans lequel lesdits moyens de restriction d'entrée (3) sont configurés pour se déplacer automatiquement vers une position fermée une fois que la fiche ou le jack est retiré.

5. Ensemble selon la revendication 1, dans lequel un obturateur commun est prévu pour les deux ouvertures d'entrée de terminal et les moyens de montage.

6. Ensemble de prise de courant inviolable (100) comprenant :
des ouvertures d'entrée de terminal (p1, p2) pour l'entrée d'une fiche ou d'un jack ;
des moyens de montage (5) disposés à proximité desdites ouvertures d'entrée de terminal pour installer ledit ensemble de prise ;
des moyens de restriction d'entrée (3) prévus pour couvrir lesdites ouvertures d'entrée de terminal et lesdits moyens de montage (5) ; et
un dispositif de sécurité (2) capable d'être déverrouillé par un moyen de déverrouillage amovible (10) et relié avec lesdits moyens de restriction d'entrée (3), de manière que lesdites ouvertures d'entrée de terminal (p1, p2) et lesdits moyens de montage (5) soient accessibles seulement lors du déverrouillage dudit dispositif de sécurité (2) en utilisant ledit moyen de déverrouillage amovible (10),
**caractérisé en ce que**
des obturateurs séparés sont prévus pour lesdites ouvertures d'entrée de terminal et lesdits moyens de montage et lesdits obturateurs séparés sont reliés indépendamment audit moyen de déverrouillage.

7. Ensemble selon la revendication 1 ou 6, dans lequel, pour démonter ledit ensemble, un outil spécial (T), qui est une combinaison d'un outil de démontage de moyens de montage (13) et d'une fiche attachée (11), est prévu pour simultanément déplacer lesdits moyens de restriction d'entrée (3) lors du déverrouillage dudit dispositif de sécurité (2) et s'engager avec lesdits moyens de montage (5) pour les détacher.

8. Ensemble selon la revendication 1 ou 6, dans lequel ledit dispositif de sécurité (2) est fixé sur un couvercle supérieur (1) dudit ensemble.

9. Ensemble selon la revendication 3, dans lequel lesdits moyens de montage (5) sont insérés centralement dans un boîtier d'obturateur (6) et ledit obturateur (3) conjointement à un ressort d'obturateur (4) est assemblé dans ledit boîtier d'obturateur (6) et ledit boîtier d'obturateur, comprenant les moyens de montage, l'obturateur et le ressort d'obturateur, est fixé sur un couvercle supérieur dudit ensemble.
